# EUROPEAN PATENT SPECIFICATION

(11) **EP 4 081 463 B1**
(45) Date of publication and mention of the grant of the patent: **17.01.2024**
(21) Application number: 20845507.1
(22) Date of filing: 28.12.2020
(51) Int. Cl.: B65D 77/04, B65D 81/34

(54) **TWO-PART RFID TAGS FOR INCORPORATION INTO MICROWAVABLE FOOD PACKAGING**
ZWEITEILIGE RFID-ETIKETTEN ZUM EINSATZ BEI MIKROWELLENTAUGLICHEN LEBENSMITTELVERPACKUNGEN
ÉTIQUETTES RFID EN DEUX PARTIES DESTINÉES À ÊTRE INCORPORÉES DANS UN EMBALLAGE ALIMENTAIRE ALLANT AU FOUR À MICRO-ONDE

(30) Priority: 28.12.2019 US 201962954454 P
(43) Date of publication of application: 02.11.2022
(73) Proprietor: Avery Dennison Retail Information Services LLC, Mentor, OH 44060 (US)
(72) Inventor: FORSTER, Ian, J., Mentor, OH 44060 (US)
(74) Representative: HGF
(86) International application number: PCT/US2020/067168
(87) International publication number: WO 2021/134066

(56) References cited:
- EP-A2- 1 479 619
- US-A1- 2018 189 623
- US-B1- 10 311 355

## Description

### CROSS-REFERENCE TO RELATED APPLICATION

The present application claims the benefit of U.S. Provisional Patent Application No. 62/954,454 filed December 28, 2019.

### FIELD

The present subject matter relates to packaging for microwavable food items. More particularly, the present subject matter relates to two-part radio frequency identification ("RFID") tags incorporated into packaging for microwavable food items.

### BACKGROUND

Microwavable food item packaging can include cooking aids that are intended to be placed into the microwave oven with the food item during cooking/heating. For example, foods having crusts, such as frozen pies or stuffed bread, may benefit from "crisping sleeves," which are paper items that at least partially surround the food item during microwaving. Typically, a "crisping sleeve" has a paper substrate, with a susceptor incorporated into the inner surface of the "crisping sleeve," facing and preferably in contact with the food item. The susceptor, which may be a metallized film, absorbs microwave energy and converts it into heat, which crisps and/or browns the crust or surface of the food item, thus improving the look and texture of the food item. Due to the absorbing nature of the film used as the susceptor, relatively low levels of energy are reflected by it, such that it does not strike an arc due to generating high differential voltages between adjacent parts of the film, which could otherwise cause the packaging to catch fire.

Other microwavable food items (particularly those having an associated sauce or liquid component) may be provided in a film-sealed plastic tray. The film is either removed prior to microwaving the food item or retained on the tray (either intact or with one or more slits cut into the film) during microwaving of the food item.

RFID tag have been proposed for incorporation into product packaging for various purposes, including inventory management and theft prevention. For example, an RFID tag may be secured to or otherwise associated with the enclosure (typically, a paper or cardboard sleeve or box) of packaging for a microwavable food item. The entirety of the packaging is not intended to be microwaved, but rather the food item (and, optionally, a "crisping sleeve" or tray or the like) is removed from the enclosure and inserted into the microwave oven for heating/cooking.

The RFID tag includes an RFID chip, with an associated antenna for transmitting information to and/or receiving information from an RFID reader. The RFID chip is electrically coupled to the antenna across a gap defined by the antenna between two conductor pad areas. Such RFID tags inherently must, at some point, have a gap across which the RFID chip is placed that has a voltage at the intended frequency of operation when in the field of a reader device. The power required incident on the RFID chip may be as low as 10 microwatts, whereas a microwave oven may typically operate at a power level in excess of 800 watts, which can generate very high voltages across the gap and the associated RFID chip.

The antenna is designed to operate at a first frequency, for example in the range of approximately 860 MHz to 930 MHz, with the antenna taking incident power at the first frequency from an RFID reader and converting it to a voltage across the RFID chip to allow it to operate.

A second frequency applied by the microwave oven, typically on the order of approximately 2,450 MHz, may also be incident on the antenna when the RFID tag is placed into the microwave oven. The antenna is not designed to operate at the second frequency, as the very high power levels incident at second frequency will generate high voltages on the antenna. These high voltages can appear at a number of places on the antenna; however, by methods such as introducing large gaps between antenna elements and controlled radii, a voltage across said elements that would generate a high voltage breakdown and, hence, arc can be avoided. However, the gap bridged by the RFID chip is necessarily relatively small and, hence, a high voltage arises at the second frequency, which high voltage may cause a breakdown and generate an arc.

To avoid problems of this nature, the RFID tag is typically configured to be readily removable or otherwise dissociable from the food item, such as by securing it to the enclosure of the package, which may include instructions to not microwave the enclosure. However, it is possible that a user failing to take proper care could place the entire package (including the RFID tag) into the microwave oven with the food item, thereby failing to dissociate the RFID tag from the food item.

Even if the RFID tag is properly dissociated from the food item prior to microwaving the food item, the RFID tag has certain limitations. For example, if the RFID tag is secured to an enclosure of the packaging, it is impossible to track the food item using an RFID reader before the food item is placed into the enclosure. However, it may be advantageous to be able to read and/or write to the RFID tag before the food item is placed into the enclosure to provide traceability of the ingredients, the machinery used, etc. Similarly, it becomes impossible to track the food item after it has been removed from the enclosure. This is disadvantageous when the food item is intended to be removed from the enclosure, heated in a microwave, and then paid for, which may include communicating with the RFID tag for pricing and/or inventory purposes at a cash register or similar point of sale terminal.

EP 1479619 discloses a susceptor tray which has a susceptor surface of a platform positioned above a downwardly extending portion that has sidewall functions and that traps heated vapour within an open surface defined by the susceptor tray. A kit of the susceptor tray and a dough containing food product has a storage mode which permits the food product to be stored within the open volume and out of contact with the susceptor surface. The extending portion preferably includes apertures to permit controlled dissipation of heated paper from out of the open volume during cooking with in a microwave oven. US 2018/189623 discloses RFID tags which are provided for incorporation into the packaging of a microwavable food item, with the RFID tag being configured to be safely microwaved. The RFID tag includes an antenna defining a gap and configured to operate at a first frequency. An RFID chip is electrically coupled to the antenna across the gap. A shielding structure is electrically coupled to the antenna across the gap and overlays the RFID chip. The shielding structure includes a shield conductor and a shield dielectric at least partially positioned between the shield conductor and the RFID chip. The shielding structure is configured to limit the voltage across the gap when the antenna is exposed to a second frequency that is greater than a first frequency.

### SUMMARY

There are several aspects of the present subject matter which may be embodied separately or together in the devices and systems described and claimed below. These aspects may be employed alone or in combination with other aspects of the subject matter described herein, and the description of these aspects together is not intended to preclude the use of these aspects separately or the claiming of such aspects separately or in different combinations as may be set forth in the claims appended hereto.

Packaging for microwavable food items is described herein. In some embodiments, the packaging includes a first package member configured to be microwaved and a second package member associated with the first member, with the second package member being configured to be dissociated from the first package member prior to microwaving the first package member. In some embodiments, in addition to the above, the packaging also includes an RFID tag containing a reactive strap and a far-field antenna.

In some embodiments, the packaging is as described above and the reactive strap is associated with the first package member, while the far-field antenna is associated with the second package member and is separate from the reactive strap. In some embodiments, the reactive strap is configured to be coupled to the far-field antenna when the second package member is associated with the first package member and to be decoupled from the far-field antenna when the second package member is dissociated from the first package member.

In some embodiments, the reach strap and antenna are as described above and the RFID tag is capable of far-field communication when the reactive strap is coupled to the far-field antenna, while the reactive strap is capable of only near-field communication when it is decoupled from the far-field antenna.

Methods of using the packaging described for microwaving food items are also described herein. In some embodiments, the method includes associating at least a portion of a microwavable food item to a first package member that includes an associated reactive strap. In some embodiments, the reactive strap is communicated with via near-field communication. In some embodiments, the first package member is associated with a second package member that includes an associated far-field antenna so as to cause the reactive strap to couple to the far-field antenna to define an RFID tag. In some embodiments, the RFID tag is communicated with via far-field communication.

### BRIEF DESCRIPTION OF THE DRAWINGS

Fig. 1 is side elevational view of an exemplary packaging for a microwavable food item according to an aspect of the present disclosure;
Fig. 2 is a side elevational view of a first package member and associated reactive strap of the packaging of Fig. 1; and
Fig. 3 is a side elevational view of a second package member and associated far-field antenna of the packaging of Fig. 1.

### DETAILED DESCRIPTION

As required, detailed embodiments of the present invention are disclosed herein; however, it is to be understood that the disclosed embodiments are merely exemplary of the invention, which may be embodied in various forms. Therefore, specific details disclosed herein are not to be interpreted as limiting, but merely as a basis for the claims and as a representative basis for teaching one skilled in the art to variously employ the present invention in virtually any appropriate manner.

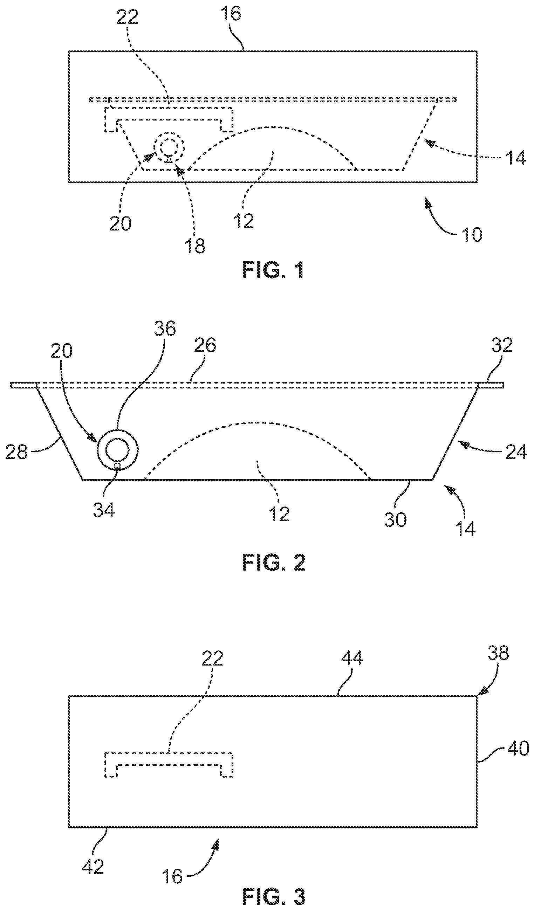

Fig. 1 shows packaging 10 for a microwavable food item 12. The packaging 10 includes a first package member 14 (also shown in Fig. 2) and a second package member 16 (also shown in Fig. 3). The packaging 10 further includes an RFID tag 18, with one component 20 thereof associated with the first package member 14 and a second component 22 thereof associated with the second package member 16.

The first package member 14 is configured to be microwaved with the microwavable food item 12 and may be differently configured without departing from the scope of the present disclosure. In the illustrated embodiment, the first package member 14 is provided as a tray 24 (typically formed of black or clear plastic) that is configured to receive at least a portion of the microwavable food item 12, with a removable film 26 overlaying an open top of the tray 24. In another exemplary embodiment, the first package member 14 is provided as a "crisping sleeve." Other exemplary first package members include, but are not limited to, plates, bowls, cups, or any other shape or member.

Regardless of the particular configuration of the first package member 14, a reactive strap 20 of the RFID tag 18 is associated with the first package member 14. In some embodiments, it may be advantageous for the reactive strap 20 to be associated with an outer surface of the first package member 14 in order to separate the reactive strap 20 from the microwavable food item 12, but it is within the scope of the present disclosure for the reactive strap 20 to instead be associated with an inner surface of the first package member 14 or both surfaces of the first package member 14. If the reactive strap 20 is associated with an inner surface of the first package member 14, in some embodiments, it may be advantageous for the reactive strap 20 to be located at a position that is spaced from the microwavable food item 12 (e.g., to be positioned adjacent to an upper end of the tray 24, while the microwavable food item 12 rests on a bottom end or base of the tray 24). However, it is contemplated that the reactive strap 20 may be in contact with the microwavable food item 12.

In the illustrated embodiment, the reactive strap 20 is associated with a side surface 28 of the tray 24. In other embodiments, the reactive strap 20 may be associated with some other surface of the first package member 14, including a bottom or base surface 30 or an upper or top surface 32. As shown in Fig. 1 (and as will be described in greater detail herein), the reactive strap 20 may be positioned at a location that places it adjacent to the other component 22 of the RFID tag 18. Thus, the location at which the reactive strap 20 is associated to the first package member 14 may be informed by the location at which the other component 22 of the RFID tag 18 is associated to the second package member 16, and vice versa.

Regardless of where the reactive strap 20 is positioned with respect to the first package member 14, it may be associated to the first package member 14 by any suitable approach. For example, in one embodiment, the reactive strap 20 may be secured to the first package member 14 by an adhesive or a mechanical fastener or via crimping. In another exemplary embodiment, the first package member 14 may define a pocket or cavity in which the reactive strap 20 may be at least partially received. Other approaches to association of the first package member 14 and the reactive strap 20 may be employed without departing from the scope of the present disclosure.

As for the structure of the reactive strap 20, it may be variously configured without departing from the scope of the present disclosure. In the illustrated embodiment, the reactive strap 20 includes an RFID chip 34 coupled to a conductive ring or loop of conductor 36. As will be described in greater detail, the reactive strap 20 cooperates with the other component 22 of the RFID tag 18 to render the RFID tag 18 capable of far-field communication. However, isolated from the other component 22 of the RFID tag 18 (as in Fig. 2), the reactive strap 20 is capable of only near-field communication (i.e., communication in a range on the order of approximately 300 mm). By such a configuration, the reactive strap 20 allows for the exchange of information (e.g., regarding the operations and/or materials used to make the microwavable food item 12 and/or the price of the microwavable food item 12) before the two package members 14 and 16 are associated with each other and after the two package members 14 and 16 have been dissociated. To that end, in some embodiments, it may be advantageous for the reactive strap 20 to be associated to the first package member 14 early in the manufacturing process, such as immediately after the first package member 14 has been made and prior to introduction of the microwavable food item 12 to the first package member 14. However, it is also within the scope of the present disclosure for the reactive strap 20 to be associated to the first package member 14 later in the manufacturing process, including after the microwavable food item 12 has been associated to the first package member 14.

Regardless of the particular configuration of the reactive strap 20, as it is associated to the first package member 14 (which is intended to be microwaved with the microwavable food item 12), it is configured to be microwave-safe. By such a configuration, a user may safely place the first package member 14 into the microwave to heat the microwavable food item 12 without first removing the reactive strap 20 from the first package member 14. Microwaving the reactive strap 20 does not cause it to overheat and damage the first package member 14 and/or create sparks (e.g., arc). Preferably, the reactive strap 20 is configured to survive microwaving, which allows for continued use of the reactive strap 20 after the microwavable food item 12 and first package member 14 have been heated. This may be particularly advantage when the intention is for the microwavable food item 12 and first package member 14 to be heated and then brought to a cash register or similar point of sale terminal for payment for the microwavable food item 12, which may include the reactive strap 20 being read at close range to indicate the price of the microwavable food item 12 and/or to indicate that a unit has been sold for inventory-tracking purposes. However, while it may be advantageous for the reactive strap 20 to survive microwaving, it is also within the scope of the present disclosure for the reactive strap 20 to be rendered inoperative by microwaving, provided that it does not overheat and cause damage to the first package member 14, create sparks, or otherwise create an unsafe condition when microwaved.

Turning now to the second package member 16, it is not necessarily configured to be microwaved with the microwavable food item 12, but rather to be dissociated from the first package member 14 prior to microwaving the first package member 14 and microwavable food item 12. The second package member 16 may be differently configured without departing from the scope of the present disclosure. In the illustrated embodiment, the second package member 16 is provided as an enclosure or box or sleeve 38 (typically formed of paper or cardboard) that is configured to receive at least a portion of the first package member 14. The second package member 16 may include graphics, cooking instructions, a bar code, and the like.

Regardless of the particular configuration of the second package member 16, the second component 22 of the RFID tag 18 is associated with the second package member 16. In some embodiments, it may be advantageous for the second component 22 of the RFID tag 18 to be associated with an inner surface of the second package member 16 (as in the illustrated embodiment) in order to allow it to be positioned closer to the reactive strap 20, but it is within the scope of the present disclosure for the second component 22 of the RFID tag 18 to instead be associated with an outer surface of the second package member 16.

As described above, in some embodiments, it may be advantageous for the second component 22 of the RFID tag 18 to be positioned adjacent to the reactive strap 20 when the second package member 16 is associated with the first package member 14. Thus, in the illustrated embodiment, the second component 22 of the RFID tag 18 is associated with a side surface 40 of the second package member 16, in a location that is similar to the location at which the reactive strap 20 is associated to the side surface 28 of the first package member 14. In other embodiments, the second component 22 of the RFID tag 18 may be associated with some other surface of the second package member 16, including a bottom or base surface 42 (preferably when the reactive strap 20 is associated to the bottom or base surface 30 of the first package member 14) or an upper or top surface 44 (preferably when the reactive strap 20 is associated to the upper or top surface 32 of the first package member 14).

Regardless of where the second component 22 of the RFID tag 18 is positioned with respect to the second package member 16, it may be associated to the second package member 16 by any suitable approach. For example, in one embodiment, the second component 22 of the RFID tag 18 may be secured to the second package member 16 by an adhesive or a mechanical fastener or via crimping. In another exemplary embodiment, the second package member 16 may define a pocket or cavity in which the second component 22 of the RFID tag 18 may be at least partially received. Other approaches to association of the second package member 16 and the second component 22 of the RFID tag 18 (e.g., printing the second component 22 of the RFID tag 18 onto a surface of the second package member 16) may be employed without departing from the scope of the present disclosure.

As for the structure of the second component 22 of the RFID tag 18, it may be variously configured without departing from the scope of the present disclosure, provided that it is configured to cooperate with the reactive strap 20 to render the RFID tag 18 capable of far-field communication. In the illustrated embodiment, the second component 22 of the RFID tag 18 is provided as a far-field antenna configured as a dipole antenna. In such a configuration, the far-field antenna 22 provides no function when decoupled from the reactive strap 20 (i.e., when the first and second package members 14 and 16 are dissociated from each other), but only serves to increase or boost the communication range of the reactive strap 20 (i.e., of the RFID tag 18) when the far-field antenna 22 is coupled to the reactive strap 20 (i.e., while the second package member 16 is associated with the first package member 14). Thus, as described above, it may be advantageous for the far-field antenna 22 to be associated to the second package member 16 at a location that places the far-field antenna 22 adjacent to the reactive strap 20 when the second package member 16 is associated with the first package member 14, to better ensure that the far-field antenna 22 is properly coupled to the reactive strap 20.

By such a configuration, the two components 20 and 22 of the RFID tag 18 combine to allow for the RFID tag 18 to be used for logistics, such as tracking the packaging 10 during transportation from a factory to a store and/or managing the inventory of a store. Thus, packaging 10 according to the present disclosure allows for communication at different ranges at different times. For example, as described above, the reactive strap 20 may be associated with the first package member 14 after the first package member 14 has been formed, but before the microwavable food item 12 has been introduced to the first package member 14. At that time (i.e., before the second package member 16 has been associated with the first package member 14), the reactive strap 20 may communicate via near-field communication. Subsequently, such as after the microwavable food item 12 has been introduced to the first package member 14 and after the first package member 14 has been sealed, the second package member 16 (and associated far-field antenna 22) is associated to the first package member 14, thereby coupling the far-field antenna 22 to the reactive strap 20 and defining the RFID tag 18. Thereafter, the RFID tag 18 may communicate via far-field communication. Finally, prior to microwaving the microwavable food item 12, the second package member 16 may be dissociated from the first package member 14 (e.g., by being removed and discarded or recycled), thereby decoupling the far-field antenna 22 from the reactive strap 20. At that time, the reactive strap 20 may again communicate via near-field communication, such as at a cash register.

The far-field antenna 22 increases the energy coupled into the reactive strap 20 and may react differently than the reactive strap 20 to being microwaved (e.g., by heating up more than the reactive strap 20), so it is preferable for the second package member 16 to be dissociated from the first package member 14 (and the associated reactive strap 20) prior to microwaving the first package member 14. However, as it is possible that a user will not so dissociate the second package member 16 (and associated far-field antenna 22) from the first package member 14, the far-field antenna 22 may be configured to ensure that microwaving the assembled RFID tag 18 will not create smoke or fire or an unsafe condition. This may be achieved according to any suitable approach, which may include the far-field antenna 22 being configured to fracture when microwaved, such as by configuring the far-field antenna 22 to expand at a different rate than the second package member 16 when heated, thereby causing the far-field antenna 22 to fracture. Alternatively, the far-field antenna 22 may be configured such that it is allowed to overheat, possibly damaging the second package member 16, but not creating an arc or fire or smoke.

It will be understood that the embodiments described above are illustrative of some of the applications of the principles of the present subject matter. Numerous modifications may be made by those skilled in the art without departing from the scope of the appended claims, including those combinations of features that are individually disclosed or claimed herein. For these reasons, the scope hereof is not limited to the above description but is as set forth in the following claims.

## Claims

1. Packaging (100) for a microwavable food item (12) comprising:
a first package member (14) configured to be microwaved;
a second package member (16) associated with the first member and configured to be dissociated from the first package member prior to microwaving the first package member; and
an RFID tag (18) comprising
a reactive strap (20) associated with the first package member, and
a far-field antenna (22) associated with the second package member and separate from the reactive strap, wherein
the reactive strap is configured to be coupled to the far-field antenna when the second package member is associated with the first package member,
the reactive strap is configured to be decoupled from the far-field antenna when the second package member is dissociated from the first package member,
the RFID tag is capable of far-field communication when the reactive strap is coupled to the far-field antenna, and
the reactive strap is capable of only near-field communication when the reactive strap is decoupled from the far-field antenna.

2. The packaging (100) of claim 1, wherein the first package member (14) comprises a tray (24) configured to receive at least a portion of a microwavable food item (12).

3. The packaging (100) of claim 1 or claim 2, wherein the second package member (16) comprises an enclosure receiving at least a portion of the first package member (14) when the second package member is associated with the first package member.

4. The packaging (100) of any of claims 1 to 3, wherein one or more of:
the reactive strap (20) comprises an RFID chip coupled to a conductive ring; and
the reactive strap is secured to a side surface (28) or a base surface (30) of the first package member (14).

5. The packaging (100) of any of claims 1 to 4, wherein one or more of:
the far-field antenna (22) is configured as a dipole antenna; and
the far-field antenna is secured to an inner surface or an outer surface of the second package member (16).

6. The packaging (100) of any of claims 1 to 5, wherein:
the first package member (14) comprises a tray (24) configured to receive at least a portion of a microwavable food item (12),
the second package member (16) comprises an enclosure receiving at least a portion of the first package member when the second package member is associated with the first package member,
the reactive strap (20) comprises an RFID chip coupled to a conductive ring, and
the far-field antenna (22) is configured as a dipole antenna.

7. A method of packaging a microwavable food item (12), comprising:
associating at least a portion of a microwavable food item to a first package member (14) including an associated reactive strap (20);
communicating with the reactive strap via near-field communication;
associating the first package member with a second package member (16) including an associated far-field antenna (22) so as to cause the reactive strap to couple to the far-field antenna to define an RFID tag (18); and
communicating with the RFID tag via far-field communication.

8. The method of claim 7, wherein the first package member (14) comprises a tray (24) configured to receive at least a portion of the microwavable food item (12).

9. The method of claim 7 or claim 8, wherein the second package member (16) comprises an enclosure receiving at least a portion of the first package member (14) when the second package member is associated with the first package member.

10. The method of any of claims 7 to 9, wherein one or more of:
the reactive strap (20) comprises an RFID chip coupled to a conductive ring; and
the reactive strap is secured to a side surface (28) or a base surface (30) of the first package member (14).

11. The method of any of claims 7 to 10, wherein one or more of:
the far-field antenna (22) is configured as a dipole antenna; and
the far-field antenna is secured to an inner surface or an outer surface of the second package member (16).

12. The method of any of claims 7 to 11, wherein:
the first package member (14) comprises a tray (24) configured to receive at least a portion of the microwavable food item (12),
the second package member (16) comprises an enclosure receiving at least a portion of the first package member when the second package member is associated with the first package member,
the reactive strap (20) comprises an RFID chip coupled to a conductive ring, and
the far-field antenna (22) is configured as a dipole antenna.

## Patentansprüche

1. Verpackung (100) für einen in einem Mikrowellenherd erwärmbaren Lebensmittelartikel (12), umfassend:
ein erstes Verpackungselement (14), das dazu konfiguriert ist, in einem Mikrowellenherd erwärmt zu werden;
ein zweites Verpackungselement (16), das mit dem ersten Element verbunden und dazu konfiguriert ist, vor dem Erwärmen des ersten Verpackungselements in einem Mikrowellenherd von dem ersten Verpackungselement losgelöst zu werden; und
ein RFID-Etikett (18), das Folgendes umfasst:
ein reaktives Band (20), das mit dem ersten Verpackungselement verbunden ist, und
eine Fernfeldantenne (22), die mit dem zweiten Verpackungselement verbunden und von dem reaktiven Band getrennt ist, wobei
das reaktive Band dazu konfiguriert ist, mit der Fernfeldantenne gekoppelt zu sein, wenn das zweite Verpackungselement mit dem ersten Verpackungselement verbunden ist,
das reaktive Band dazu konfiguriert ist, von der Fernfeldantenne entkoppelt zu sein, wenn das zweite Verpackungselement von dem ersten Verpackungselement losgelöst ist,
das RFID-Etikett zu einer Fernfeldkommunikation fähig ist, wenn das reaktive Band mit der Fernfeldantenne gekoppelt ist, und
das reaktive Band nur zu einer Nahfeldkommunikation fähig ist, wenn das reaktive Band von der Fernfeldantenne entkoppelt ist.

2. Verpackung (100) nach Anspruch 1, wobei das erste Verpackungselement (14) eine Schale (24) umfasst, die dazu konfiguriert ist, mindestens einen Abschnitt eines in einem Mikrowellenherd erwärmbaren Lebensmittelartikels (12) aufzunehmen.

3. Verpackung (100) nach Anspruch 1 oder Anspruch 2, wobei das zweite Verpackungselement (16) eine Umhüllung umfasst, die mindestens einen Abschnitt des ersten Verpackungselements (14) aufnimmt, wenn das zweite Verpackungselement mit dem ersten Verpackungselement verbunden ist.

4. Verpackung (100) nach einem der Ansprüche 1 bis 3, wobei eines oder mehrere von Folgenden gilt:
das reaktive Band (20) umfasst einen RFID-Chip, der mit einem leitfähigen Ring gekoppelt ist; und
das reaktive Band ist an einer Seitenfläche (28) oder einer Grundfläche (30) des ersten Verpackungselements (14) befestigt.

5. Verpackung (100) nach einem der Ansprüche 1 bis 4, wobei eines oder mehrere von Folgenden gilt:
die Fernfeldantenne (22) ist als eine Dipolantenne konfiguriert; und
die Fernfeldantenne ist an einer Innenfläche oder einer Außenfläche des zweiten Verpackungselements (16) befestigt.

6. Verpackung (100) nach einem der Ansprüche 1 bis 5, wobei:
das erste Verpackungselement (14) eine Schale (24) umfasst, die dazu konfiguriert ist, mindestens einen Abschnitt eines in einem Mikrowellenherd erwärmbaren Lebensmittelartikels (12) aufzunehmen,
das zweite Verpackungselement (16) eine Umhüllung umfasst, die mindestens einen Abschnitt des ersten Verpackungselements aufnimmt, wenn das zweite Verpackungselement mit dem ersten Verpackungselement verbunden ist,
das reaktive Band (20) einen RFID-Chip umfasst, der mit einem leitfähigen Ring gekoppelt ist, und
die Fernfeldantenne (22) als eine Dipolantenne konfiguriert ist.

7. Verfahren zum Verpacken eines in einem Mikrowellenherd erwärmbaren Lebensmittelartikels (12), umfassend:
Verbinden mindestens eines Abschnitts eines in einem Mikrowellenherd erwärmbaren Lebensmittelartikels mit einem ersten Verpackungselement (14), das ein damit verbundenes reaktives Band (20) enthält;
Kommunizieren mit dem reaktiven Band über Nahfeldkommunikation;
Verbinden des ersten Verpackungselements mit einem zweiten Verpackungselement (16), das eine damit verbundene Fernfeldantenne (22) enthält, um zu bewirken, dass sich das reaktive Band mit der Fernfeldantenne koppelt, um ein RFID-Etikett (18) zu definieren; und
Kommunizieren mit dem RFID-Etikett über Fernfeldkommunikation.

8. Verfahren nach Anspruch 7, wobei das erste Verpackungselement (14) eine Schale (24) umfasst, die dazu konfiguriert ist, mindestens einen Abschnitt des in einem Mikrowellenherd erwärmbaren Lebensmittelartikels (12) aufzunehmen.

9. Verfahren nach Anspruch 7 oder Anspruch 8, wobei das zweite Verpackungselement (16) eine Umhüllung umfasst, die mindestens einen Abschnitt des ersten Verpackungselements (14) aufnimmt, wenn das zweite Verpackungselement mit dem ersten Verpackungselement verbunden ist.

10. Verfahren nach einem der Ansprüche 7 bis 9, wobei eines oder mehrere von Folgenden gilt:
das reaktive Band (20) umfasst einen RFID-Chip, der mit einem leitfähigen Ring gekoppelt ist; und
das reaktive Band ist an einer Seitenfläche (28) oder einer Grundfläche (30) des ersten Verpackungselements (14) befestigt.

11. Verfahren nach einem der Ansprüche 7 bis 10, wobei eines oder mehrere von Folgenden gilt:
die Fernfeldantenne (22) ist als eine Dipolantenne konfiguriert; und
die Fernfeldantenne ist an einer Innenfläche oder einer Außenfläche des zweiten Verpackungselements (16) befestigt.

12. Verfahren nach einem der Ansprüche 7 bis 11, wobei:
das erste Verpackungselement (14) eine Schale (24) umfasst, die dazu konfiguriert ist, mindestens einen Abschnitt des in einem Mikrowellenherd erwärmbaren Lebensmittelartikels (12) aufzunehmen,
das zweite Verpackungselement (16) eine Umhüllung umfasst, die mindestens einen Abschnitt des ersten Verpackungselements aufnimmt, wenn das zweite Verpackungselement mit dem ersten Verpackungselement verbunden ist,
das reaktive Band (20) einen RFID-Chip umfasst, der mit einem leitfähigen Ring gekoppelt ist, und
die Fernfeldantenne (22) als eine Dipolantenne konfiguriert ist.

## Revendications

1. Emballage (100) pour un article alimentaire allant au four à micro-onde (12) comprenant :
un premier élément d'emballage (14) conçu pour aller au four à micro-onde ;
un second élément d'emballage (16) associé au premier élément et conçu pour être dissocié du premier élément d'emballage avant de passer le premier élément d'emballage au four à micro-onde ; et
une étiquette RFID (18) comprenant
une sangle réactive (20) associée au premier élément d'emballage, et
une antenne de champ lointain (22) associée au second élément d'emballage et séparée de la sangle réactive,
ladite sangle réactive étant conçue pour être couplée à l'antenne de champ lointain lorsque le second élément d'emballage est associé au premier élément d'emballage,
ladite sangle réactive étant conçue pour être découplée de l'antenne de champ lointain lorsque le second élément d'emballage est dissocié du premier élément d'emballage,
ladite étiquette RFID étant capable d'établir une communication en champ lointain lorsque la sangle réactive est couplée à l'antenne de champ lointain, et
ladite sangle réactive étant capable d'établir une communication uniquement en champ proche lorsque la sangle réactive est découplée de l'antenne de champ lointain.

2. Emballage (100) selon la revendication 1, ledit premier élément d'emballage (14) comprenant un plateau (24) conçu pour recevoir au moins une partie d'un article alimentaire allant au four à micro-onde (12).

3. Emballage (100) selon la revendication 1 ou la revendication 2, ledit second élément d'emballage (16) comprenant une enceinte recevant au moins une partie du premier élément d'emballage (14) lorsque le second élément d'emballage est associé au premier élément d'emballage.

4. Emballage (100) selon l'une quelconque des revendications 1 à 3, un ou plusieurs parmi :
ladite sangle réactive (20) comprenant une puce RFID couplée à un anneau conducteur ; et
ladite sangle réactive étant fixée à une surface latérale (28) ou à une surface de base (30) du premier élément d'emballage (14).

5. Emballage (100) selon l'une quelconque des revendications 1 à 4, un ou plusieurs parmi :
ladite antenne de champ lointain (22) étant conçue sous forme d'antenne dipôle ; et
ladite antenne de champ lointain étant fixée à une surface interne ou à une surface externe du second élément d'emballage (16).

6. Emballage (100) selon l'une quelconque des revendications 1 à 5,
ledit premier élément d'emballage (14) comprenant un plateau (24) conçu pour recevoir au moins une partie d'un article alimentaire allant au four à micro-onde (12),
ledit second élément d'emballage (16) comprenant une enceinte recevant au moins une partie du premier élément d'emballage lorsque le second élément d'emballage est associé au premier élément d'emballage,
ladite sangle réactive (20) comprenant une puce RFID couplée à un anneau conducteur, et
ladite antenne de champ lointain (22) étant réalisée sous forme d'antenne dipôle.

7. Procédé d'emballage d'un article alimentaire allant au four à micro-onde (12), comprenant :
l'association d'au moins une partie d'un article alimentaire allant au four à micro-onde à un premier élément d'emballage (14) comprenant une sangle réactive associée (20) ;
la communication avec la sangle réactive par l'intermédiaire d'une communication en champ proche ;
l'association du premier élément d'emballage à un second élément d'emballage (16) comprenant une antenne de champ lointain (22) associée de façon à amener la sangle réactive à se coupler à l'antenne de champ lointain pour définir une étiquette RFID (18) ; et
la communication avec l'étiquette RFID par l'intermédiaire d'une communication en champ lointain.

8. Procédé selon la revendication 7, ledit premier élément d'emballage (14) comprenant un plateau (24) conçu pour recevoir au moins une partie de l'article alimentaire allant au four à micro-onde (12).

9. Procédé selon la revendication 7 ou la revendication 8, ledit second élément d'emballage (16) comprenant une enceinte recevant au moins une partie du premier élément d'emballage (14) lorsque le second élément d'emballage est associé au premier élément d'emballage.

10. Procédé selon l'une quelconque des revendications 7 à 9, une ou plusieurs parmi :
ladite sangle réactive (20) comprenant une puce RFID couplée à un anneau conducteur ; et
ladite sangle réactive étant fixée à une surface latérale (28) ou à une surface de base (30) du premier élément d'emballage (14).

11. Procédé selon l'une quelconque des revendications 7 à 10, une ou plusieurs parmi :
ladite antenne de champ lointain (22) étant conçue sous forme d'antenne dipôle ; et
ladite antenne de champ lointain étant fixée à une surface interne ou à une surface externe du second élément d'emballage (16).

12. Procédé selon l'une quelconque des revendications 7 à 11,
ledit premier élément d'emballage (14) comprenant un plateau (24) conçu pour recevoir au moins une partie de l'article alimentaire allant au four à micro-onde (12),
ledit second élément d'emballage (16) comprenant une enceinte recevant au moins une partie du premier élément d'emballage lorsque le second élément d'emballage est associé au premier élément d'emballage,
ladite sangle réactive (20) comprenant une puce RFID couplée à un anneau conducteur, et
ladite antenne de champ lointain (22) étant conçue sous forme d'antenne dipôle.
